# EUROPEAN PATENT SPECIFICATION

(11) **EP 4 589 543 B1**
(45) Date of publication and mention of the grant of the patent: **05.08.2026**
(21) Application number: 24152768.8
(22) Date of filing: 19.01.2024
(51) Int. Cl.: G06T 15/08

(54) **TECHNIQUE FOR OPTICAL PROPERTY PER SAMPLING POINT MEDICAL IMAGE RENDERING**
TECHNIK FÜR OPTISCHE EIGENSCHAFT PRO ABTASTPUNKT FÜR MEDIZINISCHE BILDDARSTELLUNG
TECHNIQUE DE RENDU D'IMAGE MÉDICALE DE PROPRIÉTÉ OPTIQUE PAR POINT D'ÉCHANTILLONNAGE

(43) Date of publication of application: 23.07.2025
(73) Proprietor: Siemens Healthineers AG, 91301 Forchheim (DE)
(72) Inventor: Petkov, Kaloian, Lawrenceville, 08648 (US)
(74) Representative: Schwarz, Claudia

(56) References cited:
- US-A1- 2016 343 161
- BORIS N ORESHKIN ET AL: "Uncertainty driven probabilistic voxel selection for image registration", ARXIV.ORG, CORNELL UNIVERSITY LIBRARY, 201 OLIN LIBRARY CORNELL UNIVERSITY ITHACA, NY 14853, 2 October 2020 (2020-10-02), XP081776759, DOI: 10.1109/TMI.2013.2264467
- MICHAEL C KRYGIER ET AL: "Quantifying the unknown impact of segmentation uncertainty on image-based simulations", ARXIV.ORG, CORNELL UNIVERSITY LIBRARY, 201 OLIN LIBRARY CORNELL UNIVERSITY ITHACA, NY 14853, 9 September 2021 (2021-09-09), XP091043187, DOI: 10.1038/S41467-021-25493-8
- C. LUNDSTROM ET AL: "Uncertainty Visualization in Medical Volume Rendering Using Probabilistic Animation", IEEE TRANSACTIONS ON VISUALIZATION AND COMPUTER GRAPHICS IEEE, USA, vol. 13, no. 6, 1 November 2007 (2007-11-01), pages 1648 - 1655, XP011196454, ISSN: 1077-2626, DOI: 10.1109/TVCG.2007.70518

## Description

### TECHNICAL FIELD

The present invention relates to a technique for volume rendering, and/or surface rendering, of a medical imaging data set based on optical properties per sampling points, in particular comprising a method, a computing device, a system comprising the computing device, and a computer program product.

### BACKGROUND

Modern artificial intelligence (AI)-based segmentation tools are revolutionizing the way a physician interacts with imaging data across many clinical and education applications. However, high performance and high-quality three-dimensional (3D) volume rendering that leverages the binary masks produced from such algorithms remains a challenge, especially in real-time imaging modalities and for image-based guidance applications. Fast rendering algorithms often result in distracting visual artifacts at the boundaries of segmentation classes which may impede the spatial understanding of the physician. Impeding the spatial understanding may in turn impair a successful treatment planning and/or execution.

Publication US 2016/343161 A1 (PALADINI GIANLUCA [US] ET AL) 24 November 2016 (2016-11-24) describes a method for iterative Monte Carlo volume rendering of medical volumetric data, in which a plurality of light rays is traced into a scene containing volumetric data and scattering locations (sampling point positions) of those rays are randomised using a common sequence of random numbers. Along each randomised scattered ray, at least one trilinearly interpolated and shaded sample is computed, constituting the determination of optical properties per sampling point. The volume is rendered by accumulating these optical properties across the traced and scattered rays, producing a photorealistic medical image. The randomisation of sampling positions is uniform and unconditional - it is applied identically across all voxels using a common random number sequence, without any input from a segmentation mask and without any per-voxel uncertainty indicator governing the magnitude of the spatial perturbation. Further, publication by C. LUNDSTROM ET AL: "Uncertainty Visualization in Medical Volume Rendering Using Probabilistic Animation", IEEE TRANSACTIONS ON VISUALIZATION AND COMPUTER GRAPHICS IEEE, USA, vol. 13, no. 6, 1 November 2007, pages 1648-1655, discloses a medical direct volume rendering method in which a per-voxel uncertainty indicator - derived from a probabilistic tissue classification model directly analogous to a segmentation mask - is used to scale the degree of stochastic variation in the rendering: regions of high classification uncertainty receive proportionally greater stochastic variation than confident regions; its stochastic variation operates on the optical property (transfer function material assignment) domain across successive animation frames, not on the spatial location of sampling points within a single render pass.

The document "Uncertainty driven probabilistic voxel selection for image registration", arXiv: 2010.00988v1 by Boris N. Oreshkin and Tal Arbel describes a probabilistic voxel selection strategy for medical image registration in time-sensitive contexts. A voxel sampling probability field (VSPF) is built based on the uncertainty of the transformation parameters.

Smooth rendering with binary segmentation masks may first use a smoothed distance transform on the binary volume to compute a signed distance field, whose zero (0) levelset may be rendered as an isosurface. Other image smoothing operations may be applied as well, including specialized interpolation approaches (as described in [1]) and smooth surface extraction (as described in [2]). While such conventional approaches can produce high quality results, they require additional pre-processing leading to undesirable latencies, in particular making them unsuitable for realtime applications.

### SUMMARY

It is therefore an object of the present invention to provide a solution for high performance rendering of medical image data, for reducing latencies, in particular due to pre-processing, and/or for avoiding disruptive changes to the rendering pipeline. The solution provided herewith should be usable for interventional image-guided procedures, e.g. surgical image-guided procedures.

This object is solved by a method for volume rendering, and/or surface rendering, of a medical imaging data set based on optical properties per sampling points, by a computing device, by a system comprising the computing device, and by a computer program (and/or computer program product) according to the appended independent claims. Advantageous aspects, features and embodiments are described in the dependent claims and in the following description together with advantages.

In the following the solution according to the invention is described with respect to the claimed method for volume rendering, and/or surface rendering, of a medical imaging data set based on optical properties per sampling points as well as with respect to the claimed computing device. Features, advantages or alternative embodiments herein can be assigned to the other claimed objects (e.g., the system, the computer program, or a computer program product), and vice versa. In other words, claims for the computing device, and/or the system comprising the computing device, can be improved with features described or claimed in the context of the methods. In this case, the functional features of the method are embodied by structural units of the system and vice versa, respectively.

As to a method aspect, a computer-implemented method for volume rendering, and/or surface rendering, of a medical imaging data set based on optical properties per sampling points is provided. The method comprises a step of receiving an uncertainty indicator per voxel, and/or per surface element, in relation to a segmentation mask of (and optionally an anatomical structure comprised in) a medical imaging data set. The method further comprises a step of scaling a randomization of one or more sampling points based on the received uncertainty indicator. Optionally, the scaling of the randomization may comprise scaling a distance to a sample center as a function of the received uncertainty indicator. The function may comprise a linear dependence.

The method further comprises a step of determining at least one optical property per sampling point.

The at least one optical property may be derived from a medical scanner output by means of a transfer function which, **e.g.,** in the case of a computed tomography (CT) scanner maps Hounsfield units (HU) to optical color and optical opacity (e.g., by means of a one-dimensional, 1D transfer function). Higher-order transfer functions may have further inputs, e.g., data gradient, and/or curvature. E.g., the mapping may be set by an algorithm, may use procedure-specific presets, may be set by user interactions, or combinations of these methods.

The method still further comprises a step of rendering the volume based on the voxels, and/or the surface based on the surface elements. The rendering is based on the determined at least one optical property per sampling point.

By the inventive technique, a high performance and high quality three-dimensional (3D) volume rendering, and/or a surface rendering of medical imaging data sets, are enabled, which can avoid visual artefacts, in particular at boundaries of anatomical structures and/or of segmentation classes. Alternatively or in addition, disruptive changes of the rendered volume and/or the rendered surface can be avoided. A spatial understanding of the rendered volume and/or the rendered surface can be improved for a medical practitioner (e.g., a physician, a radiologist and/or a surgeon). Further alternatively or in addition, the inventive technique can dispense with a need for complex pre-processing and/or facilitate avoiding latencies. The technique is in particular combinable with real-time medical imaging, e.g., for medical image-based guidance (e.g., during surgical intervention and/or endoscopy).

The uncertainty indicator (also: uncertainty value) may comprise a value of an (e.g., uncertainty) metric and/or an estimated value. The (e.g., uncertainty) value may represent a confidence in a label prediction, e.g., from a deep neural network-based segmentation algorithm, the subjective confidence in a manual segmentation of a practitioner, and/or a value derived from the data, e.g. a signal-to-noise (e.g., SNR) measurement.

The uncertainty indicator (and/or, e.g., uncertainty, value) may be derived (e.g., computed) or received for all voxels or subsets of voxels, e.g., near the boundary of a segmented object or for the voxels belonging to a label and/or segmentation mask.

E.g., the (in particular uncertainty) metric may have values in the range between zero and one (and/or [0,1]), with zero corresponding to no uncertainty and one corresponding to maximal uncertainty.

The method may make use of (in particular one or more) sampling points. The sampling points may be randomized.

The randomization may comprise those positions of the sampling points (also: sampling locations and/or sampling positions) used for computing the volume rendering integral along viewing rays are offset in a randomized direction. The offset magnitude may be proportional to the uncertainty indicator (also: in particular local, uncertainty value).

For sampling locations with well-defined local surfaces (e.g., with a large voxel gradient magnitude), the randomization may be constrained to the plane perpendicular to the surface normal and/or to the voxel gradient. With weakly defined local surfaces (e.g., with a voxel gradient magnitude below a predetermined threshold), the sampling position offset may comprise (or may be a) weighted average of the volume-based and/or surface-based randomization, with the weighting proportional to the voxel gradient magnitude.

Randomized locations may (e.g., always) be determined (e.g., computed) on both the plane perpendicular to the voxel gradient and within a box or sphere around the voxel. The two types of randomized locations may (e.g., always) be averaged with weighting based on the gradient magnitude. If the gradient magnitude is large, e.g., near the surface of a bone, the planar sampling may be the primary or only contributor to the weighted average.

The voxel gradient may be (or may correspond to) the vector in the direction of the largest change in scalar data (e.g., comprising opacity, color, reflectance, one or more values indicative of a chromatic scattering, HU values, and/or CT numbers). The voxel gradient magnitude may indicate the amount of change in the scalar data. The magnitude may be high at the interface between tissue types, e.g., bone and muscle, and low within a single tissue type. Alternatively or in addition, a large gradient magnitude may indicate that the location around the voxel may behave more like a surface in the context of physical processes or rendering, **e.g.,** in relation to light scattering.

The use of the uncertainty indicator for scaling the randomization of one or more sampling points may alternatively be denoted as stochastic sampling and/or as stochastic (in particular label) volume rendering (and/or surface rendering, in particular in case of a single sampling point).

For volume rendering, the uncertainty indicator may be received (and/or provided) per voxel. Alternatively or in addition, for surface rendering, the uncertainty indicator may be received (and/or provided) per surface element (and/or per pixel).

The anatomical structure may comprise one or more organs, and/or one or more types of body tissues **(e.g.,** soft tissue and/or bone tissue). Any one of the body tissues may be assigned a value on the Hounsfield unit (HU) scale. The HU scale value for computed tomography (CT) as medical imaging modality may be denoted as CT number.

The segmentation mask may comprise a binary mask per class (also: label). A class may refer to an anatomical structure, like an organ.

A segmentation class, and/or a label, may refer to an anatomical structure **(e.g.,** an organ, such as the liver, and/or a kidney).

For surface rendering, the randomization may be scaled for one sampling point. Alternatively or in addition, for volume rendering, the randomization may be scaled for multiple sampling points.

The at least one optical property may comprise at least one rendering parameter, in particular a **(e.g.,** tint of an) color or a change thereof, a **(e.g.,** change in an) optical opacity, and/or a combination thereof. Alternatively or in addition, the at least one optical property may refer to how a location within the volume reacts with light in the context of a rendering algorithm, **e.g.,** how it absorbs and scatters light.

By the scaling of the randomization of the one or more sampling points, at least on parameter **(e.g.,** a segmentation class and/or a HU scale value) per voxel, and/or per surface element, may be modified. This effect may in particular occur at the boundaries between anatomical structures, and/or at the boundaries between segmentation classes, due to the dependence on the uncertainty indicator, the value of which is increased at the boundaries as compared to inside the anatomical structure, and/or inside the segmentation class.

The rendering may be based on a raycasting and/or Monte Carlo path tracing algorithm. Alternatively or in addition, the rendering may comprise performing smoothed shading based on the uncertainty indicator and/or on subsurface scattering (SSS).

SSS may be used to perform smoothed surface shading. The uncertainty indicator (also: uncertainty value) may be used to define the scattering parameter, which may be a scatter radius and/or an average path length between scatter events. Larger uncertainty **(e.g.,** according to the uncertainty indicator) may result in light rays leaving the surface farther away from the entry point, which produces a smoothed surface appearance in the final **(e.g.,** rendered and/or displayed) image.

Conventional volume visualization or rendering methods based on raycasting, which are still used in many current advanced visualization medical products, simulate only the emission and absorption of radiant energy along the primary viewing rays through the volumetric data. The emitted radiant energy at each point is absorbed according to the Beer-Lambert law along the ray to the observer location with absorption coefficients derived from the patient data. Renderers (computing devices with an implemented rendering algorithm) typically compute shading, using only the standard local shading models at each point along the ray (e.g., the Blinn-Phong model), based on local volume gradients (i.e., local illumination). While fast, these methods do not simulate the complex light scattering and extinction associated with photorealism (i.e., global illumination).

Monte Carlo path tracing is a global illumination algorithm, which solves the rendering equation using Monte Carlo integration. It can produce highly realistic images, including for medical visualization. At the same time, the computational requirements are very high since hundreds to thousands of discrete light paths need to be simulated at each pixel or voxel. As more and more paths are simulated, the solution converges on an accurate estimation of the irradiance at each point for incoming light from all directions. The renderer employs a hybrid of volumetric scattering and surface-like scattering, modeled by phase functions and bidirectional reflectance distribution functions (BRDFs), respectively, based on properties derived from the anatomical structures. Producing a single image may take of the order of minutes and is thus currently not suitable for real-time rendering. A variety of algorithms aim at addressing the performance challenges, including irradiance caching, which requires a long pre-computation on lighting changes before real-time rendering is possible, artificial intelligence (AI)-based denoising, and light path generation. However, real-time rendering still remains unachievable with conventional Monte Carlo path tracing.

The rendering may further use a smoothed distance transform and/or a signed distance field (SDF). Alternatively or in addition, the rendering may further make use of interpolation and/or smooth surface extraction.

The step of rendering may comprise displaying the volume and/or the surface using a screen, a stereoscopic display, a virtual reality (VR) display, and/or an augmented reality (AR) headset.

The received uncertainty indicator may be based on a noise measurement within a local neighbourhood within a segmentation mask and/or across segmentation masks, and/or within an anatomical structure and/or across anatomical structures. Optionally, the noise measurement may comprise determining a signal-to-noise ratio (SNR), a peak signal-to-noise ratio (PSNR), and/or a contrast-to-noise ratio (CNR). Alternatively or in addition, the noise measurement may comprise determining a signal-to-interference-and-noise ratio (SINR) and/or a carrier-to-noise-and-interference ratio (CNIR).

A noise measurement may provide a higher value (e.g., of noise) with an increasing number of label values (and/or segmentation classes). Alternatively or in addition, a low measured SNR may imply high noise in the neighbourhood of the sample, which may be associated with high uncertainty in a segmentation (and/or color tinting of anatomical structures). A high SNR may imply a strong signal, and in this case a more certain segmentation. Further alternatively or in addition, a high noise measurement may be associated with high uncertainty and/or a large number of unique voxel classes and/or label values in the local neighbourhood of the sample.

In areas of high frequency and/or large overlap between segmentation masks, and/or between anatomical structures, voxel and/or surface elements, have a high uncertainty, **e.g.,** corresponding to a high value of the uncertainty indicator.

The high frequency may refer to a changing of details of the medical imaging data comprised in the medical imaging data set, in particular in terms of signal processing performed in the frequency domain and/or using a (in particular fast) Fourier transformation (in particular an FFT). Alternatively or in addition, a high frequency may be indicative of, and/or may comprise, a sharp transition among labels.

The received uncertainty indicator may be determined by a segmentation algorithm, which provides a segmentation mask.

The uncertainty indicator, e.g., based on a noise measurement, may be (e.g., routinely) determined when the segmentation of the medical imaging data comprised in the medical imaging data set is performed.

E.g., the step of receiving the uncertainty indicator may comprise (e.g., simultaneously) receiving the segmentation mask.

The scaling of the randomization may comprise scaling a distance to a sample center as a function of the received uncertainty indicator. The function may comprise a linear dependence.

The distance to the sample center may comprise a distance along a ray, may comprise a movement along a random direction, and/or may be determined by a size of a box.

Computing the volume rendering integral along a viewing ray requires sampling the optical properties of the volume at a specific set of locations (e.g., points at regular intervals along the viewing ray).

For each sampling location, the location in (e.g., 3D) space may be perturbed based on the uncertainty indicator (and/or uncertainty value) so that for areas with high uncertainty, averaging the values over a larger local neighbourhood is performed when Monte Carlo integration is used. The same process may be applied many times.

The scaling of the randomization may parameterize how the uncertainty indicator (and/or uncertainty value) is tied to the rendering.

E.g., in practical terms, the perturbation may be applied by creating a sphere and/or an axis-aligned bounding box (AABB), where the radius, and/or the diameter, are proportional to the uncertainty indicator (and/or uncertainty value). A random point inside the sphere and/or the AABB may be picked as the sampling location.

Alternatively or in addition, the unit sphere and/or unit AABB may be sampled at the sample location and the distance scaled to the original sample center based on the uncertainty indicator (and/or uncertainty value).

For locations with well-defined local surfaces (e.g., having a large voxel gradient magnitude), the randomization may be constrained to the plane perpendicular to the surface normal and/or to the voxel gradient, in which case points are picked in a disk and/or rectangle on the perpendicular plane. Alternatively or in addition, with weakly defined local surfaces (e.g., having a voxel gradient magnitude below a predetermined threshold), the sampling position offset may comprise (or may be) a weighted average of the volume-based and/or surface-based randomization, in particular with the weighting proportional to the voxel gradient magnitude.

E.g., when the (e.g., voxel) gradient magnitude is small, the weight for a surface-like location randomization may be small and the weight for a volume-like location randomization may be large.

In the context of weighted averaging, only the relative magnitudes of the weights may matter since they may be (e.g., always) normalized to sum up to 1.

The method may further comprise a step of combining the optical properties of the more than one sampling points. The rendering may be based on the combined at least one optical property of the more than one sampling points.

The combining may be performed for the case of more than one sampling points, in particular for volume rendering. Alternatively or in addition, the combining may comprise determining a (e.g., weighted) average of the optical properties (e.g., color and/or opacity per voxel).

By the combining, a smooth rendering of the segmentation mask, and/or of the anatomical structures, is facilitated.

The rendering may comprise a denoising. Optionally, the denoising may comprise using random number generator (RNG) sequences for sampling the medical imaging data comprised in the medical imaging data set.

The rendering may be repeated (and/or performed multiple times) with a different seed for the random number generation algorithm (and/or with changed randomization).

The RNG sequence may comprise a very large sequence of (e.g., millions and/or billions) of random numbers, e.g., within the interval between zero and one (and/or [0,1]), such as values of 0.01 (and/or 1/100), and/or 0.1 (and/or 1/10).

A randomized location (e.g., of the sampling point) may be independent, in particular by definition, and/or per voxel and/or per surface element (and/or pixel). Alternatively or in addition, each time a sampling location is determined, a (in particular independent and/or different) randomized offset may be applied.

The technique may use three types of sampling. The first type of sampling is the sampling of the volume optical properties along a ray to compute the volume rendering integral. The sampling location offsets according to the inventive technique are applied to these samples.

The second type of sampling is to sample each pixel in the final image multiple times to reduce the noise from the randomized offsets. Alternatively or in addition, statistical and/or AI-based denoising methods may be used. This sampling may in particular be used with volume rendering algorithms based on ray casting.

Concerning the third type of sampling, when using Monte Carlo integration for photorealistic volume rendering, the individual light paths from each pixel through the volume are sampled. The rendering process is repeated many times, and the results are averaged as in the raycasting case. Statistical and/or AI-based denoising methods may further be used to reduce the image variance faster.

The medical imaging data set may be acquired by means of a medical scanner. The medical scanner may comprise an X-ray device, an ultrasound (US) device, a positron emission tomography (PET) device, a computed tomography (CT) device, a single-photon emission computed tomography (SPECT) device, and/or a magnetic resonance tomography (MRT) device.

The volumetric rendering may in particular be performed for a medical imaging data set acquired from the medical scanner.

The at least one optical property may comprise an opacity, a reflectance, a color, and/or at least one value indicative of a chromatic scattering.

The at least one optical property may in particular comprise a combination of the color and the opacity.

Rendering may comprise applying a reconstruction filter. The reconstruction filter may comprise, e.g., a trilinear filter, a cubic B-Spline filter, a nearest neighbour filter, and/or any (in particular other) higher-order reconstruction filter.

The rendering may comprise ray casting, Monte Carlo path tracing, subsurface scattering (SSS), and/or rendering a color mesh.

SSS may comprise (and/or may be) a shading effect computed as part of rendering a surface. The surface may be defined explicitly (e.g., as a mesh), and/or implicitly (e.g., as a, in particular zero, level set, and/or as an isosurface). Alternatively or in addition, the surface may comprise a surface of an organ and/or of an anatomical structure.

SSS may simulate the diffusion of light below the surface of the (in particular segmented) anatomical structure (also: object).

SSS may be used to incorporate uncertainty, to smoothen shading and/or to improve an image quality, in particular while preserving the original surface geometry.

Alternatively or in addition, a change in a color mesh may be used (e.g., to indicate the uncertainty of assigning a voxel, and/or a surface element, to a segmentation class and/or to an anatomical structure).

The SSS may be controlled by a, in particular single, radius value. The radius value may be determined based on the received uncertainty indicator.

The radius may determine a distribution of volumes. Alternatively or in addition, the radius may determine the maximum distance between the light exit point and the light entry point assuming multiple scattering of light below the surface. Further alternatively or in addition, the radius may determine the size of a disk placed at the light entry position and oriented along the surface normal. Alternatively or in addition, the "disk normal" may be oriented along the surface normal, in particular the plane of the disk may be perpendicular to the surface normal. The projection of the disk onto the surface may define a patch, which may be sampled with various statistical methods **(e.g.,** uniform sampling, and/or Poisson sampling) to pick a light exit location.

The received uncertainty indicator may be mapped to at least one property of the SSS. In particular, a subsurface attenuation of one or more wavelength bands may be modulated according to the received uncertainty indicator. E.g., a radius of a patch for SSS sampling may be changed by different amounts based on both the uncertainty (e.g., according to the uncertainty indicator) and color wavelength. As a result, the shading in areas of high uncertainty may both become smoother and may pick up a (e.g., red) subsurface tint.

Alternatively or in addition, physically-based rendering of the SSS effect may use an average path length between scatter events (e.g., instead of a radius).

A different (and/or independent) radius may be used for each color channel. E.g., SSS for a human skin material may use a larger radius for the red channel scattering to simulate blood flow below the skin surface (e.g., as compared to the radii of the green and blue channels). The uncertainty handling may use different scaling of the radius for each color channel based on a material profile.

Whenever the word "radius" is used, the same may apply to a diameter (e.g., of a disk and/or a box).

Alternatively or in addition, a (e.g., local) surface patch may be determined around a (e.g., sampling) point, where a light ray enters the surface.

A segmentation mesh (e.g., representing the segmentation mask and/or the anatomical structure) may be determined by means of a (e.g., neural) Marching Cube algorithm, and/or a Marching Tetrahedra algorithm.

The Marching Cube algorithm may comprise a computer graphics algorithm for extracting a polygonal mesh (in particular of an isosurface) from a 3D discrete scalar field, the elements of which are the voxels). The applications of this algorithm may be mainly concerned with medical visualizations such as CT and/or MRT medical imaging data sets, and special effects or 3D modelling with metaballs, or other metasurfaces. The Marching Cubes algorithm may be meant to be used for 3D (in particular for volume rendering). A 2D version of this algorithm (e.g., for surface rendering) may be called the marching squares algorithm.

The Marching Cube algorithm may proceed through the scalar field (and/or the voxels), taking eight neighbor locations at a time (thus forming an imaginary cube), then determining the one or more polygons needed to represent the part of the isosurface that passes through this cube. The individual polygons may then be fused into the desired surface.

Fusing may be done by creating an index to a precalculated array of 256 possible polygon configurations (2⁸=256) within the cube, and/or by treating each of the 8 scalar values as a bit in an 8-bit integer. If the scalar's value is higher than the iso-value (e.g., it is inside the surface), the appropriate bit may be set to one, while if it is lower (e.g., outside), it may be set to zero. The final value, after all eight scalars are checked, may be the actual index to the polygon indices array.

Each vertex of the generated polygons may be placed on the appropriate position along the cube's edge by linearly interpolating the two scalar values that are connected by that edge.

The gradient of the scalar field at each grid point (and/or sampling point) may be (and/or may correspond to) also the normal vector of a hypothetical isosurface passing from that point. Therefore, these normals may be interpolated along the edges of each cube to find the normals of the generated vertices, which may be essential for shading the resulting mesh with some illumination model.

Marching tetrahedra may comprise an algorithm in the field of computer graphics to render implicit surfaces and may be viewed as a generalization of the Marching Cube algorithm.

In the Marching Tetrahedra algorithm, each cube may be split into six irregular tetrahedra by cutting the cube in half three times, and/or cutting diagonally through each of the three pairs of opposing faces. In this way, the tetrahedra all share one of the main diagonals of the cube. Instead of the twelve edges of the cube, there are nineteen edges: the original twelve, six face diagonals, and the main diagonal. Just like in the Marching Cubes algorithm, the intersections of these edges with the isosurface may be approximated by linearly interpolating the values at the grid points (and/or sampling points).

Adjacent cubes may share all edges in the connecting face, including the same diagonal. This is an important property to prevent cracks in the rendered surface, because interpolation of the two distinct diagonals of a face usually gives slightly different intersection points. An added benefit is that up to five computed intersection points may be reused when handling the neighbor cube. This includes the computed surface normals and/or other graphics attributes at the intersection points.

Each tetrahedron has sixteen possible configurations, falling into three classes: no intersection, intersection in one triangle, and intersection in two (adjacent) triangles. It is straightforward to enumerate all sixteen configurations and map them to vertex index lists defining the appropriate triangle strips.

The cubical cells to be meshed can alternatively be sliced into five (5) tetrahedra, using a Diamond cubic lattice as a basis. Cubes may be mated on each side with another cube that has an opposite alignment of the tetrahedron around the centroid of the cube. Alternating vertices may have a different number of tetrahedra intersecting on them, resulting in a slightly different mesh depending on position. When sliced this way, additional planes of symmetry may be provided. Having a tetrahedron around the centroid of the cube may also generate very open spaces around points that are outside of the surface.

In the absence of a user interaction (e.g., during a predetermined time period), for the rendering, multiple stochastic passes may be accumulated, and/or averaged, over medical imaging data associated with different sampling points.

The absence of the user interaction (in particular with the renderer) may also be denoted as (in particular performing the rendering) offline.

By accumulating the multiple stochastic passes (and/or averaging over the medical imaging data associated with different sampling points and/or samples), a variance, in particular due to noise, may be reduced and a quality of the rendered volume may be improved.

The surface rendering with uncertainty-based subsurface scattering (SSS) may (e.g., still) use a stochastic process for the rendering, and/or (e.g., still) need multiple passes to reduce the variance and/or noise (e.g., even though only using one sampling point), in particular like the volume rendering.

Alternatively or in addition, there exist rendering techniques that can produce approximate SSS without stochastic sampling, e.g., screen-space techniques, which may be suitable for interactive rendering, while the more complex method (e.g., according to the inventive technique) may be used during offline rendering.

Alternatively or in addition, in the presence of a user interaction, the rendering may be performed without accumulating multiple stochastic passes, and/or without averaging, over medical imaging data associated with different sampling points. Optionally, after a predetermined time period, in which no user interaction is received, multiple stochastic passes may be accumulated, and/or averaged, over medical imaging data associated with different sampling points.

The user interaction may be received by means of a user interface (UI), in particular a graphical user interface (GUI). The user interaction may, e.g., comprise, rotating the rendered volume.

The presence of the user interaction (in particular with the renderer) may also be denoted as (in particular performing the rendering) online and/or in realtime.

By skipping the accumulating of the multiple stochastic passes, and/or skipping the averaging, noisy medical imaging data may be rendered during the user interaction.

Alternatively or in addition, an interactive reconstruction of Monte Carlo image sequences may make use of a recurrent denoising autoencoder.

Further alternatively or in addition, a temporal reprojection may be made use of.

The recurrent denoising autoencoder may combine spatial and temporal denoising, using Monte Carlo samples from the current and previous frames.

Alternatively or in addition, temporal reprojection may be used explicitly to map pixels from previously rendered images to the current image for weighted blending. If the previous image is rendered offline with high quality, blending pixels from the previous image may increase the quality compared to only denoising the interactive image.

The rendering may comprise rendering an inhomogeneous representation of the volume, and/or of the surface, comprising at least partially a segmentation mask and at least partially a (in particular tinted or colored or shaded or marked) anatomical structure, preferably according to a selected HU scale value (e.g., for, in particular specifically, rendering soft tissue or bone tissue).

The rendered volume may be displayed by means of a display device. The display device may comprise a (e.g., computer) screen, a projector (e.g., onto a surface in a, in particular operating, room, and/or onto a patient), and/or a virtual reality (VR, and/or augmented reality, AR, and/or extended reality, XR) headset.

The segmentation may only be performed for selected organs (and/or selected anatomical structures) within the medical imaging data set.

The computer-implemented method may make use of deep learning (DL) .

As to a device aspect, a computing device for volume rendering, and/or surface rendering, of a medical imaging data set based on optical properties per sampling points is provided. The computing device comprises a receiving module configured for receiving an uncertainty indicator per voxel, and/or per surface element, in relation to a segmentation mask of (and optionally an anatomical structure comprised in) a medical imaging data set. The computing device comprises a scaling module configured for scaling a randomization of one or more sampling points based on the received uncertainty indicator. Optionally, the scaling of the randomization may comprise scaling a distance to a sample center as a function of the received uncertainty indicator.

The computing device further comprises a determining module configured for determining at least one optical property per sampling point. The computing device still further comprises a rendering module configured for rendering the volume based on the voxels, and/or the surface based on the surface elements. The rendering is based on the determined at least one optical property per sampling point.

Optionally, the computing device may comprise a combining module configured for combining the optical properties of the more than one sampling points. The rendering may be based on the combined at least one optical property of the more than one sampling points.

The computing device may be configured to perform any one of the steps of the method, and/or comprise any one of the features, described in the context of the method aspect.

As to a system aspect, a system for volume rendering, and/or surface rendering, of a medical imaging data set based on optical properties per sampling points is provided. The system comprises a medical scanner configured for providing a medical imaging data set. The system further comprises a computing device according to the device aspect. The receiving module of the computing device is configured for receiving the uncertainty indicator per voxel, and/or per surface element, in relation to the segmentation mask of (and optionally the anatomical structure) comprised in, the medical imaging data set provided by the medical scanner.

As to a further aspect, a computer program product is provided. The computer program product comprises program elements which induce a computing device (e.g., the computing device according to the device aspect) to carry out the steps of the method for volume rendering, and/or surface rendering, of a medical imaging data set based on optical properties per sampling points according to the method aspect, when the program elements are loaded into a memory of the computing device.

As to a still further aspect, a computer-readable medium is provided, on which program elements are stored that can be read and executed by a computing device, in order to perform steps of the method for volume rendering, and/or surface rendering, of a medical imaging data set based on optical properties per sampling points according to the method aspect, when the program elements are executed by the computing device.

The properties, features and advantages of this invention described above, as well as the manner they are achieved, become clearer and more understandable in the light of the following description and embodiments, which will be described in more detail in the context of the drawings.

This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: is a flow chart of a method for volume rendering, and/or surface rendering, of a medical imaging data set based on optical properties per sampling points according to a preferred embodiment of the present invention;
- Fig. 2: is an overview of the structure and architecture of a computing device for volume rendering, and/or surface rendering, of a medical imaging data set based on optical properties per sampling points according to a preferred embodiment of the present invention, which computing device may be configured for performing the method of Fig. 1;
- Figs. 3A, 3B and 3C: show an exemplary visual comparison of using a trilinear voxel reconstruction without and with stochastic label map sampling, and of a cubic B-spline (as an example of a higher order) voxel reconstruction with stochastic label map sampling;
- Fig. 4A, 4B and 4C: show a first exemplary close-up of the anatomical structure at the top left in the trilinear voxel reconstruction with stochastic label map sampling of Fig. 3B, with Fig. 4A showing the original, Fig. 4B showing a stochastic sampling, and Fig. 4C showing the accumulated result;
- Fig. 5A, 5B and 5C: show a second exemplary close-up of the anatomical structure at bottom right in the trilinear voxel reconstruction with stochastic label map sampling of Fig. 3B, with Fig. 5A showing the original, Fig. 5B showing a stochastic sampling, and Fig. 5C showing the accumulated result;
- Figs. 6A and 6B: show an exemplary visual comparison of direct rendering of segmentation meshes obtained via Marching Cubes of a label map smoothing the surface normal only in Fig. 6A, and stochastic SSS smoothing out visual surface artefacts in Fig. 6B; and
- Figs. 7A, 7B, 7C and 7D: show a further exemplary visual comparison of a human torso using tinting structures only in Fig. 7A, segmented structures only in Fig. 7B and zooming-ins to the thorax in Figs. 7C and 7D.

### DETAILED DESCRIPTION

Any reference signs in the claims should not be construed as limiting the scope.

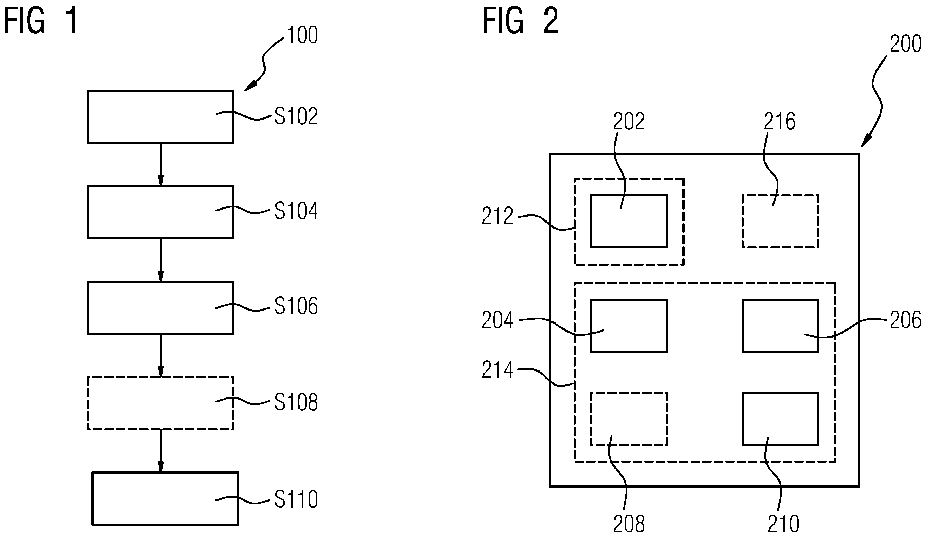

Fig. 1 schematically illustrates an exemplary flowchart for a method of volume rendering, and/or surface rendering, of a medical imaging data set based on optical properties per sampling points. The method is generally referred to by the reference sign 100.

The method 100 comprises a step S102 of receiving an uncertainty indicator per voxel, and/or per surface element, in relation to a segmentation mask of a medical imaging data set.

The method 100 further comprises a step S104 of scaling a randomization of one or more sampling points based on the received uncertainty indicator. Optionally, the scaling S104 of the randomization may comprise scaling a distance to a sample center as a function of the received S102 uncertainty indicator.

The method 100 further comprises a step S106 of determining at least one optical property per sampling point.

The method 100 still further comprises a step S110 of rendering the volume based on the voxels, and/or the surface based on the surface elements. The rendering S110 is based on the determined S106 at least one optical property per sampling point.

Optionally, the method 100 may comprise a step S108 of combining the optical properties of the more than one sampling points. The rendering S110 may be based on the combined S108 at least one optical property of the more than one sampling points.

Fig. 2 schematically illustrates an exemplary architecture of a computing device for volume rendering, and/or surface rendering, of a medical imaging data set based on optical properties per sampling points. The computing device is generally referred to by the reference sign 200.

The computing device 200 comprises a receiving module 202 configured for receiving an uncertainty indicator per voxel, and/or per surface element, in relation to a segmentation mask of a medical imaging data set.

The computing device 200 further comprises a scaling module 204 configured for scaling a randomization of one or more sampling points based on the received uncertainty indicator. Optionally, the scaling of the randomization may comprise scaling a distance to a sample center as a function of the received uncertainty indicator.

The computing device 200 further comprises a determining module 206 configured for determining at least one optical property per sampling point.

The computing device 200 still further may comprise a rendering module 210 configured for rendering the volume based on the voxels, and/or the surface based on the surface elements. The rendering is based on the determined at least one optical property per sampling point.

Optionally, the computing device 200 may comprise a combining module 208 configured for combining the optical properties of the more than one sampling points. The rendering may be based on the combined at least one optical property of the more than one sampling points.

The receiving module 202 may be embodied by an input-output interface 212. Alternatively or in addition, any one of the scaling module 204, the determining module 206, the rendering module 210, and the optional combining module 208 may be embodied by a processor (e.g., a central processing unit, CPU, and/or a graphics processing unit, GPU). Further alternatively or in addition, the computing device 200 may comprise at least one memory 216.

The computing device 200 may be configured for performing the method 100.

A system (not shown) may comprise the computing device 200 and a medical scanner, which is configured for providing the medical image data set, for which the uncertainty indicator is received.

The system may be configured to perform the method 100.

The inventive technique (e.g., comprising the method 100, and/or the computing device 200) may also be denoted as high-quality rendering with binary label volumes from segmentation with uncertainty.

The inventive technique can implement high quality rendering for segmentation data (and/or anatomical structures) via stochastic sampling. In a general embodiment, a binary mask per label may be received with the goal to modify a voxel classification, and/or other parameters, per label class for volume rendering (e.g., tinting the optical color and/or changing the optical opacity), visualize the mask directly as colored voxels, and/or visualize the mask directly as a surface. Specific applications may employ different methods per label class. "Different methods" may refer to applying a combination of the techniques listed above in a single rendering based on the segmentation, e.g., tint the voxels covered by the heart mask, lower the opacity of the voxels covered by the ribs mask, and (in particular simultaneously) render vessels as meshes.

In a first step of an embodiment (e.g., the general embodiment), a per-voxel uncertainty value (and/or uncertainty indicator) is estimated based on a noise measurement within a local neighbourhood within each mask and across masks, with voxels in areas of high frequency detail and larger overlap between masks having higher uncertainty. Alternatively or in addition, an uncertainty metric may be computed as part of the segmentation algorithm and used directly or in combination with the estimated uncertainty value.

In the embodiment, during rendering, a randomized offset is applied each time the label volume is sampled with the scaling of the distance to the sample center proportional to the uncertainty value.

By combining images produced with different RNG sequences, the rendering approximates a smooth rendering of the segmentation data in some embodiments.

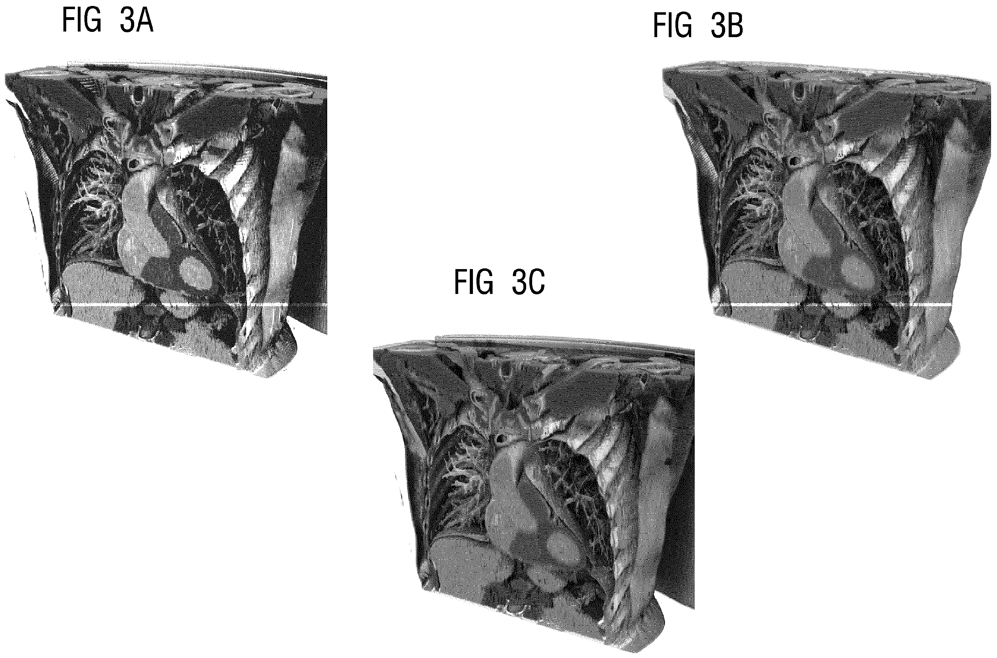

Figs. 3A, 3B and 3C showcase a result with CT images acquired at 0.56mm x 0.56mm x 3mm voxel resolution and overlapping masks for some of the segmentation classes. Figs. 3A, 3B and 3C show a visual comparison of using higher order voxel reconstruction filtering and stochastic label map filtering. The anatomical structures displayed comprise a human thorax with lungs, heart chambers, major blood vessels and ribs visible.

In Fig. 3A, a trilinear voxel reconstruction is applied. In Fig. 3B, the trilinear voxel reconstruction is combined with stochastic label map sampling. Fig. 3C shows a higher-order voxel reconstruction filter for the anatomy data, namely a Cubic B-Spline voxel reconstruction (as described in [3]), combined with stochastic label map sampling (and/or together with the stochastic label volume rendering). As visible in Figs. 3A, 3B and 3C, the rendered volumes differ in terms of how sharp or smooth transitions among different anatomical structures are.

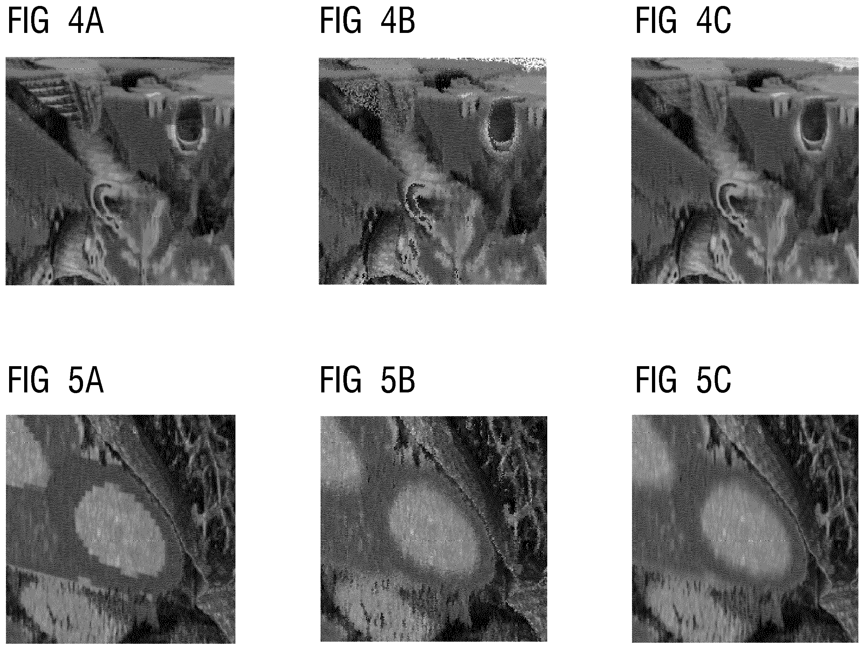

Figs. 4A, 4B and 4C and Figs. 5A, 5B and 5C focus on two different cropped regions (towards the upper left and lower right, respectively, of the anatomical structures displayed in Fig. 3B) and show the original rendering, an image with a single RNG seed, and the final accumulated result.

In Figs. 4A, 4B and 4C, a clavicle extending from a back region of the volume and cut in a cross section at the front of the rendered volume is shown. A clear improvement in the visualization of distinct anatomical structures is visible when going from the single RNG seed image to the final accumulated result.

In Figs. 5A, 5B and 5C, a cross section through a left ventricle (LV) endocardium and left ventricle (LV) epicardiumis shown as bright approximately oval shape and darker halo around the bright approximately oval shape, respectively. Again, a clear improvement in the visualization of the corresponding cardiac wall is visible when going from the single RNG seed image to the final accumulated result.

In both exemplary cases of the clavicles in Figs. 4A, 4B and 4C as well as the LV endocardium and LV epicardium in Figs. 5A, 5B and 5C, the important comparison of the inventive technique is against the images without the uncertainty technique. E.g., going from Fig. 4A to 4C, the inventive technique blends the label colors (which are displayed as different shades of gray in the accompanying drawings) and clearly identifies the volume of uncertainty.

Said differently, Figs. 4A, 4B, 4C and 5A, 5B, 5C show different close-up views illustrating the stochastic sampling of the label map. All images use trilinear voxel reconstruction as in Fig. 3B. Fig. 4A and 5A each show the original, Fig. 4B and 5B each show the stochastic sampling and Fig. 4C and 5C each show the accumulated result of the respective cropped region and/or close-up view.

Alternatively or in addition, Figs. 4A and 5A illustrate a conventional volume rendering without any uncertainty handling. In Figs. 4B and 5B, the uncertainty-based label sampling (in particular according to the inventive technique, e.g., in the step S104 of the method 100) is applied. Figs. 4B and 5B are re-rendered many times and averaged to reduce the variance in the image. The final denoised result is shown in Figs. 4C and 5C.

For surface-based visualization of the segmentation data, the renderer in an exemplary embodiment employs subsurface scattering (SSS), which simulates the diffusion of light below the surface of the segmentation object. In a preferred embodiment and in lieu of a full lightpath simulation, the amount of SSS is controlled by a single radius value that determines a surface patch around the point where a light ray enters the surface.

Randomized sampling of the patch determines the light exit point with larger patches resulting in smoother surface shading. Accumulating the results from rendering with different RGN sequences results in smooth shading of the surface in the limit. Note that the geometry of the segmentation is not (or need not be) modified, and the SSS radius is proportional to the uncertainty measurement.

"In the limit" (in particular as mathematical term) may describe the behavior (e.g., of the final rendering) as the number of accumulated samples approaches infinity. With infinite samples, the image variance would be 0 and there would be no noise. In practice, accumulating the results from rendering of different RGN sequences is stopped when the noise level is acceptable (e.g., below a predetermined threshold).

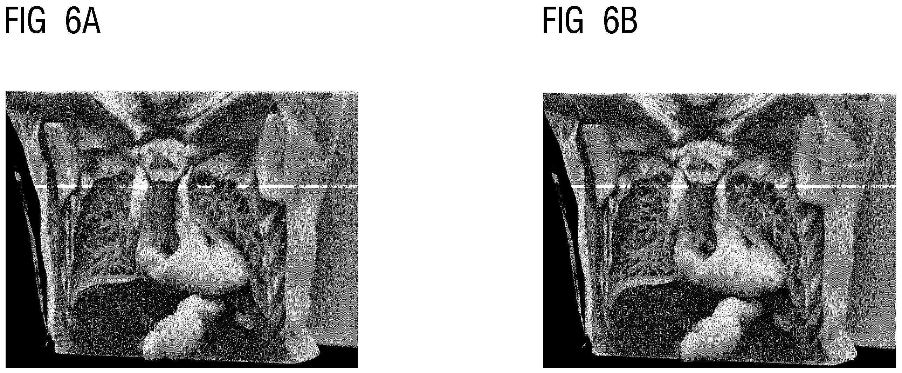

Figs. 6A and 6B demonstrate an exemplary result with segmentation meshes generated by running the Marching Cubes algorithm and without additional processing of the geometry.

In Figs. 6A and 6B, a direct rendering of segmentation meshes obtained via Marching Cubes of the label map is displayed. Stochastic SSS smoothes out visual surface artifacts (also denoted as smoothed shading) in Fig. 6B compared to smoothing the surface normals (briefly denoted as smoothed normal) only in Fig. 6A, without any modifications to the surface geometry. The effect is, e.g., visible when comparing the heart and stomach in each of Figs. 6A and 6B.

The inventive rendering technique may target two cases: offline rendering where many stochastic passes are accumulated to produce reference quality results, and realtime rendering without accumulation, which instead uses temporal image reconstruction to produce noise-free images.

In a preferred embodiment, deep learning-based image reconstruction is used, in particular using an interactive reconstruction of a Monte Carlo image sequence using a recurrent denoising autoencoder (e.g., including NVIDIA DLSS as described in [4]) and/or Intel XeSS as described in [5]. Alternatively or in addition, dedicated AI-based denoisers and/or temporal reprojection approaches (as described in [6]) may be used. In a simple embodiment, the accumulation of the stochastic passes is performed only when the user stops interacting with the system (e.g., comprising the computing device and, in particular for realtime applications, the medical scanner), with the noisy images shown during interaction.

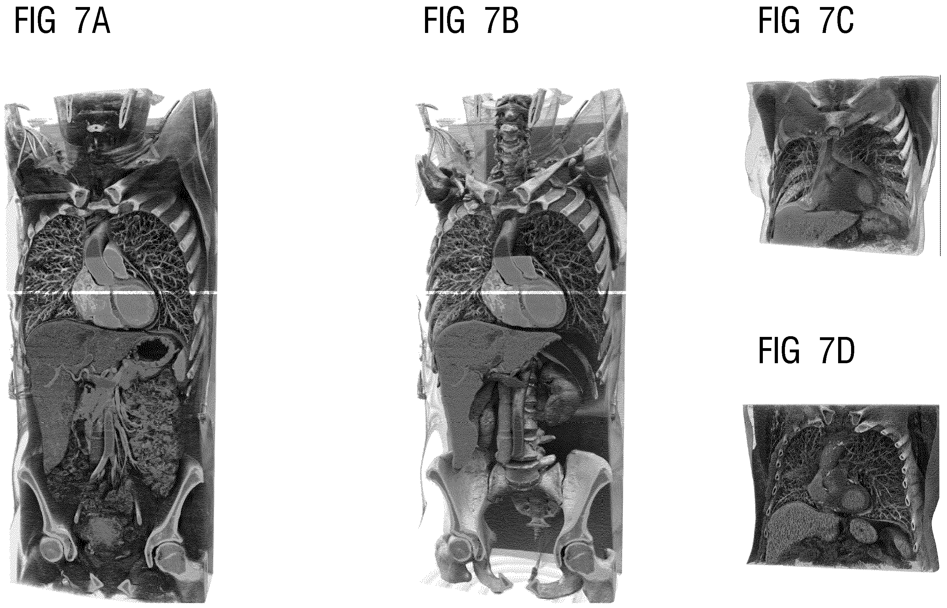

Figs. 7A, 7B, 7C and 7D show exemplary results from additional higher resolution CT scans rendered using the inventive technique.

Figs. 7A and 7B and show a human torso with tinting structures and only segmented structures, respectively. Figs. 7C and 7D show analogous images focused on the thorax displaying tinting structures and only segmented structures, respectively.

The inventive technique can produce smooth shading without blocky artifacts at the boundaries of segmentation structures, e.g., as illustrated in Figs. 7A to 7D. Furthermore, the sharpness of the color blending (as illustrated in different shades of gray, e.g., in Figs. 7A to 7D) at the interfaces of the segmented structures provides a visual indication of the amount of uncertainty in the segmentation.

The described inventive rendering technique can produce high quality 3D visualizations, in particular with binary segmentation masks, without complex pre-processing of the data. Modern image reconstruction techniques can make the stochastic approach practical for realtime use and enable applications for realtime imaging modalities (e.g., CT), e.g. for surgical guidance.

The presence of the described algorithm may be detectable by rendering phantom data with crafted segmentation masks. Uncertainty may be introduced by applying a noise filter to the binary segmentation masks and examining the amount of smoothing in the optical color and opacity applied during rendering. The case of smoothed shading for mesh surfaces may, e.g., be detected by using image data with thick slices like in Figs. 6A and 6B and evaluating for different stepping artifacts at surfaces parallel and perpendicular to the viewing direction.

SSS is conventionally used for physically-based modelling of materials, e.g., the scattering and absorption of light as it passes through human skin. By contrast, according to the inventive technique, a non-physical property (in particular an uncertainty according to the uncertainty indicator) may be mapped to SSS properties.

The uncertainty indicator (and/or uncertainty value) may be used to modulate the subsurface attenuation of one or more wavelength bands, e.g., by changing the radius of the patch for SSS sampling by different amounts based on both uncertainty (in particular according to the uncertainty indicator) and color wavelength so that the shading in areas of high uncertainty both becomes smoother and picks up a red subsurface tint.

Wherever not already described explicitly, individual embodiments, or their individual aspects and features, described in relation to the drawings can be combined or exchanged with one another, whenever such a combination or exchange is meaningful. Advantages which are described with respect to a particular embodiment of present invention or with respect to a particular figure are, wherever applicable, also advantages of other embodiments of the present invention.

### List of Cited Documents

[1] A. Kadosh, D. Cohen-Or und R. Yagel, "Tricubic interpolation of discrete surfaces for binary volumes," IEEE Transactions on Visualization and Computer Graphics, Bd. 9, Nr. 4, pp. 580 - 586, 2003.
[2] V. Lempitsky, "Surface extraction from binary volumes with higher-order smoothness," in IEEE Computer Society Conference on Computer Vision and Pattern Recognition, 2010*.*
[3] C. Sigg und M. Hadwiger, "Fast Third-Order Texture Filtering," in GPU Gems 2, NVIDIA Corporation, 2005, pp. 313-317.
[4] "NVIDIA DLSS," [Online]. Available: https://www.nvidia.com/en-us/geforce/technologies/dlss/.
[5] "Intel XeSS," [Online]. Available: https://www.intel.com/content/www/us/en/products/ docs/discrete-gpus/arc/technology/xess.html.
[6] J. Martschinke, S. Hartnagel, B. Keinert, K. Engel und M. Stamminger, "Adaptive Temporal Sampling for Volumetric Path Tracing of Medical Data," Computer Graphics Forum, Bd. 38, Nr. 4, pp. 67-76, 2019.

## Claims

1. Computer-implemented method (100) for volume rendering, and/or surface rendering, of a medical imaging data set based on optical properties per sampling points, comprising the method steps of:
- Receiving (S102) an uncertainty indicator per voxel, and/or per surface element, in relation to a segmentation mask of a medical imaging data set;
- Scaling (S104) a randomization of one or more sampling points based on the received uncertainty indicator;
- Determining (S106) at least one optical property per sampling point; and
- Rendering (S110) the volume based on the voxels, and/or the surface based on the surface elements, wherein the rendering (S110) is based on the determined (S106) at least one optical property per sampling point.

2. Method (100) according to claim 1, wherein the received (S102) uncertainty indicator is based on a noise measurement within a local neighbourhood within a segmentation mask and/or across segmentation masks, and/or within an anatomical structure and/or across anatomical structures;
optionally wherein the noise measurement comprises determining a signal-to-noise ratio, SNR, a peak signal-to-noise ratio, PSNR, and/or a contrast-to-noise ratio, CNR.

3. Method (100) according to any of the preceding claims, wherein the received (S102) uncertainty indicator is determined by a segmentation algorithm, which provides a segmentation mask.

4. Method (100) according to any of the preceding claims, wherein the scaling (S104) of the randomization comprises scaling a distance to a sample center as a function of the received (S102) uncertainty indicator.

5. Method (100) according to any of the preceding claims, further comprising the method step of:
- Combining (S108) the optical properties of the more than one sampling points, wherein the rendering (S110) is based on the combined (S108) at least one optical property of the more than one sampling points.

6. Method (100) according to any of the preceding claims, wherein the rendering (S110) comprises a denoising, optionally wherein the denoising comprises using random number generator, RNG, sequences for sampling the medical imaging data comprised in the medical imaging data set.

7. Method (100) according to any of the preceding claims, wherein the medical imaging data set is acquired by means of a medical scanner, wherein the medical scanner comprises a device selected from the group of:
- an X-ray device;
- an ultrasound, US, device;
- a positron emission tomography, PET, device;
- a computed tomography, CT, device;
- a single-photon emission computed tomography, SPECT, device; and
- a magnetic resonance tomography, MRT, device.

8. Method (100) according to any of the preceding claims, wherein the at least one optical property comprises at least one of:
- an opacity;
- a reflectance;
- a color; and
- at least one value indicative of a chromatic scattering.

9. Method (100) according to any of the preceding claims, wherein rendering (S110) comprises applying a reconstruction filter.

10. Method (100) according to any of the preceding claims, wherein the rendering (S110) comprises ray casting, Monte Carlo path tracing, subsurface scattering, SSS, and/or rendering a color mesh.

11. Method (100) according to the directly preceding claim, wherein the received (S102) uncertainty indicator is mapped to at least one property of the SSS, in particular wherein a subsurface attenuation of one or more wavelength bands is modulated according to the received (S102) uncertainty indicator.

12. Method (100) according to any of the preceding claims, wherein, in the absence of a user interaction, for the rendering (S110), multiple stochastic passes are accumulated, and/or averaged, over medical imaging data associated with different sampling points.

13. Method (100) according to any of the preceding claims, wherein, in the presence of a user interaction, the rendering (S110) is performed without accumulating multiple stochastic passes, and/or without averaging, over medical imaging data associated with different sampling points; optionally
wherein after a predetermined time period, in which no user interaction is received, multiple stochastic passes are accumulated, and/or averaged, over medical imaging data associated with different sampling points.

14. Method (100) according to any of the preceding claims, wherein the rendering (S110) comprises rendering an inhomogeneous representation of the volume, and/or of the surface, comprising at least partially a segmentation mask and at least partially a, in particular tinted, anatomical structure, preferably according to a selected HU scale value.

15. Computing device (200) for volume rendering, and/or surface rendering, of a medical imaging data set based on optical properties per sampling points, the computing device (200) comprising:
- A receiving module (202) configured for receiving an uncertainty indicator per voxel, and/or per surface element, in relation to a segmentation mask of a medical imaging data set;
- A scaling module (204) configured for scaling a randomization of one or more sampling points based on the received uncertainty indicator;
- A determining module (206) configured for determining at least one optical property per sampling point; and
- A rendering module (210) configured for rendering the volume based on the voxels, and/or the surface based on the surface elements, wherein the rendering is based on the determined at least one optical property per sampling point.

16. Computing device (200) according to the directly preceding claim, further configured to perform any one of the steps, and/or comprise any one of the features, of any one of the method claims 2 to 14.

17. System for volume rendering, and/or surface rendering, of a medical imaging data set based on optical properties per sampling points, comprising:
- A medical scanner configured for providing a medical imaging data set; and
- A computing device (200) according to claim 15 or 16, wherein the receiving module (202) is configured for receiving the uncertainty indicator per voxel, and/or per surface element, in relation to the segmentation mask of the medical imaging data set provided by the medical scanner.

18. A computer program product comprising program elements which induce a computing device (200) to carry out the steps of the method for volume rendering, and/or surface rendering, of a medical imaging data set based on optical properties per sampling points according to one of the preceding method claims, when the program elements are loaded into a memory of the computing device (200) and executed.

19. A computer-readable medium on which program elements are stored that can be read and executed by a computing device (200), in order to perform steps of the method for volume rendering, and/or surface rendering, of a medical imaging data set based on optical properties per sampling points according to one of the preceding method claims, when the program elements are executed by the computing device (200).

## Patentansprüche

1. Computerimplementiertes Verfahren (100) zum Wiedergeben von Volumina und/oder zum Wiedergeben von Oberflächen eines medizinischen Bildgebungsdatensatzes basierend auf optischen Eigenschaften von Probenorten, wobei das Verfahren die folgenden Verfahrensschritte umfasst:
- Empfangen (S102) eines Unsicherheitsindikators pro Voxel und/oder pro Oberflächenelement in Bezug auf eine Segmentierungsmaske eines medizinischen Bildgebungsdatensatzes;
- Skalieren (S104) einer Randomisierung von einem oder mehreren Probenorten basierend auf dem empfangenen Unsicherheitsindikator;
- Ermitteln (S106) von mindestens einer optischen Eigenschaft pro Probenort; und
- Wiedergeben (S110) des Volumens basierend auf den Voxeln und/oder der Oberfläche basierend auf den Oberflächenelementen, wobei das Wiedergeben (S110) auf der ermittelten (S106) mindestens einen optischen Eigenschaft pro Probenort beruht.

2. Verfahren (100) nach Anspruch 1, wobei der empfangene (S102) Unsicherheitsindikator auf einer Rauschmessung innerhalb einer lokalen Nachbarschaft innerhalb einer Segmentierungsmaske und/oder über Segmentierungsmasken hinweg und/oder innerhalb einer anatomischen Struktur und/oder über anatomische Strukturen hinweg beruht;
wobei die Rauschmessung optional ein Ermitteln eines Signal-Rausch-Verhältnisses, SNR, eines Spitzen-Signal-Rausch-Verhältnisses, PSNR, und/oder eines Kontrast-Rausch-Verhältnisses, CNR, umfasst.

3. Verfahren (100) nach einem der vorhergehenden Ansprüche, wobei der empfangene (S102) Unsicherheitsindikator durch einen Segmentierungsalgorithmus ermittelt wird, der eine Segmentierungsmaske bereitstellt.

4. Verfahren (100) nach einem der vorhergehenden Ansprüche, wobei das Skalieren (S104) der Randomisierung ein Skalieren eines Abstands zu einem Probenzentrum als eine Funktion des empfangenen (S102) Unsicherheitsindikators umfasst.

5. Verfahren (100) nach einem der vorhergehenden Ansprüche, das ferner den folgenden Verfahrensschritt umfasst:
- Kombinieren (S108) der optischen Eigenschaften von mehr als dem einen Probenort, wobei das Wiedergeben (S110) auf der kombinierten (S108) mindestens einen optischen Eigenschaft von mehr als dem einen Probenort beruht.

6. Verfahren (100) nach einem der vorhergehenden Ansprüche, wobei das Wiedergeben (S110) ein Entrauschen umfasst, wobei das Entrauschen optional ein Verwenden von Sequenzen eines Zufallszahlengenerators, RNG-Sequenzen, zum Abtasten der medizinischen Bildgebungsdaten umfasst, die in dem medizinischen Bildgebungsdatensatz enthalten sind.

7. Verfahren (100) nach einem der vorhergehenden Ansprüche, wobei der medizinische Bildgebungsdatensatz mithilfe eines medizinischen Scanners erfasst wird, wobei der medizinische Scanner eine Vorrichtung umfasst, die aus der Gruppe ausgewählt wird, die besteht aus:
- einer Röntgenvorrichtung;
- einer Ultraschallvorrichtung, US-Vorrichtung;
- einer Positronenemissionstomografie-Vorrichtung, PET-Vorrichtung;
- einer Computertomografie-Vorrichtung, CT-Vorrichtung;
- einer Einzelphotonen-Emissionscomputertomografie-Vorrichtung, SPECT-Vorrichtung; und
- einer Magnetresonanztomografie-Vorrichtung, MRT-Vorrichtung.

8. Verfahren (100) nach einem der vorhergehenden Ansprüche, wobei die mindestens eine optische Eigenschaft mindestens eine umfasst von:
- einer Opazität;
- einem Reflexionsgrad;
- einer Farbe; und
- mindestens einem Wert, der eine chromatische Streuung anzeigt.

9. Verfahren (100) nach einem der vorhergehenden Ansprüche, wobei das Wiedergeben (S110) ein Anwenden eines Rekonstruktionsfilters umfasst.

10. Verfahren (100) nach einem der vorhergehenden Ansprüche, wobei das Wiedergeben (S110) ein Raycasting, eine Monte-Carlo-Wegverfolgung, eine tiefenabhängige Volumenstreuung, SSS und/oder ein Wiedergeben eines Farbnetzes umfasst.

11. Verfahren (100) nach dem direkt vorhergehenden Anspruch, wobei der empfangene (S102) Unsicherheitsindikator mindestens einer Eigenschaft des SSS zugeordnet wird, wobei insbesondere eine tiefenabhängige Abschwächung eines oder mehrerer Wellenlängenbänder gemäß dem empfangenen (S102) Unsicherheitsindikator moduliert wird.

12. Verfahren (100) nach einem der vorhergehenden Ansprüche, wobei bei der Abwesenheit einer Benutzerinteraktion für das Wiedergeben (S110) mehrere stochastische Durchgänge über medizinische Bildgebungsdaten akkumuliert und/oder gemittelt werden, die mit verschiedenen Probenorten assoziiert sind.

13. Verfahren (100) nach einem der vorhergehenden Ansprüche, wobei bei der Anwesenheit einer Benutzerinteraktion das Wiedergeben (S110) ohne ein Akkumulieren mehrerer stochastischer Durchgänge und/oder ohne eine Mittelwertbildung über medizinische Bildgebungsdaten durchgeführt wird, die mit verschiedenen Probenorten assoziiert sind; wobei
nach einem vorbestimmten Zeitraum, in dem keine Benutzerinteraktion empfangen wird, optional mehrere stochastische Durchgänge über medizinische Bildgebungsdaten akkumuliert und/oder gemittelt werden, die mit unterschiedlichen Probenorten assoziiert sind.

14. Verfahren (100) nach einem der vorhergehenden Ansprüche, wobei das Wiedergeben (S110) ein Wiedergeben einer inhomogenen Darstellung des Volumens und/oder der Oberfläche umfasst, das und/oder die mindestens teilweise eine Segmentierungsmaske und mindestens teilweise eine, insbesondere gefärbte, anatomische Struktur, vorzugsweise gemäß einem ausgewählten HU-Skalenwert, umfassen.

15. Computervorrichtung (200) zum Wiedergeben von Volumina und/oder Oberflächen eines medizinischen Bildgebungsdatensatzes basierend auf optischen Eigenschaften von Probenorten, wobei die Computervorrichtung (200) umfasst:
- ein Empfangsmodul (202), das konfiguriert ist zum Empfangen eines Unsicherheitsindikators pro Voxel und/oder pro Oberflächenelement in Bezug auf eine Segmentierungsmaske eines medizinischen Bildgebungsdatensatzes;
- ein Skalierungsmodul (204), das konfiguriert ist zum Skalieren einer Randomisierung von einem oder mehreren Probenorten basierend auf dem empfangenen Unsicherheitsindikator;
- ein Ermittlungsmodul (206), das konfiguriert ist zum Ermitteln von mindestens einer optischen Eigenschaft pro Probenort; und
- ein Wiedergabemodul (210), das konfiguriert ist zum Wiedergeben des Volumens basierend auf den Voxeln und/oder der Oberfläche basierend auf den Oberflächenelementen, wobei das Wiedergeben auf der ermittelten mindestens einen optischen Eigenschaft pro Probenort beruht.

16. Computervorrichtung (200) nach dem direkt vorhergehenden Anspruch, die ferner konfiguriert ist, um einen der Schritte bzw. eines der Merkmale nach einem der Verfahrensansprüche 2 bis 14 durchzuführen bzw. zu umfassen.

17. System zum Wiedergeben von Volumina und/oder zum Wiedergeben von Oberflächen eines medizinischen Bildgebungsdatensatzes basierend auf optischen Eigenschaften von Probenorten, umfassend:
- einen medizinischen Scanner, der konfiguriert ist zum Bereitstellen eines medizinischen Bildgebungsdatensatzes; und
- eine Computervorrichtung (200) nach Anspruch 15 oder 16, wobei das Empfangsmodul (202) konfiguriert ist zum Empfangen des Unsicherheitsindikators pro Voxel und/oder pro Oberflächenelement in Bezug auf die Segmentierungsmaske des medizinischen Bildgebungsdatensatzes, der von dem medizinischen Scanner bereitgestellt wird.

18. Computerprogrammprodukt, das Programmelemente umfasst, die eine Computervorrichtung (200) veranlassen, die Schritte des Verfahrens zum Wiedergeben von Volumina und/oder zum Wiedergeben von Oberflächen eines medizinischen Bildgebungsdatensatzes basierend auf optischen Eigenschaften von Probenorten nach einem der vorhergehenden Verfahrensansprüche auszuführen, wenn die Programmelemente in einen Speicher der Computervorrichtung (200) geladen und ausgeführt werden.

19. Computerlesbares Medium, in dem Programmelemente gespeichert sind, die von einer Computervorrichtung (200) gelesen und ausgeführt werden können, um Schritte des Verfahrens zum Wiedergeben von Volumina und/oder zum Wiedergeben von Oberflächen eines medizinischen Bildgebungsdatensatzes basierend auf optischen Eigenschaften von Probenorten nach einem der vorhergehenden Verfahrensansprüche auszuführen, wenn die Programmelemente von der Computervorrichtung (200) ausgeführt werden.

## Revendications

1. Procédé (100), mis en œuvre par ordinateur, de rendu de volume et/ou de rendu de surface d'un ensemble de données d'imagerie médicale sur la base de propriétés optiques par points d'échantillonnage, comprenant les étapes de procédé suivantes :
- réception (S102) d'un indicateur d'incertitude par voxel et/ou par élément de surface en relation avec un masque de segmentation d'un ensemble de données d'imagerie médicale ;
- mise à l'échelle (S104) d'une randomisation d'un ou de plusieurs points d'échantillonnage sur la base de l'indicateur d'incertitude reçu ;
- détermination (S106) d'au moins une propriété optique par point d'échantillonnage ; et
- rendu (S110) du volume sur la base des voxels et/ou de la surface sur la base des éléments de surface, le rendu (S110) étant basé sur l'au moins une propriété optique par point d'échantillonnage déterminée (S106).

2. Procédé (100) selon la revendication 1, dans lequel l'indicateur d'incertitude reçu (S102) est basé sur une mesure de bruit au sein d'un voisinage local au sein d'un masque de segmentation et/ou entre des masques de segmentation et/ou au sein d'une structure anatomique et/ou entre des structures anatomiques ;
facultativement dans lequel la mesure de bruit comprend la détermination d'un rapport signal sur bruit, SNR, d'un rapport crête signal sur bruit, PSNR, et/ou d'un rapport contraste sur bruit, CNR.

3. Procédé (100) selon l'une quelconque des revendications précédentes, dans lequel l'indicateur d'incertitude reçu (S102) est déterminé par un algorithme de segmentation, lequel fournit un masque de segmentation.

4. Procédé (100) selon l'une quelconque des revendications précédentes, dans lequel la mise à l'échelle (S104) de la randomisation comprend la mise à l'échelle d'une distance à un centre d'échantillon en fonction de l'indicateur d'incertitude reçu (S102).

5. Procédé (100) selon l'une quelconque des revendications précédentes, comprenant en outre l'étape de procédé suivante :
- combinaison (S108) des propriétés optiques de plus d'un point d'échantillonnage, le rendu (S110) étant basé sur l'au moins une propriété optique de plus d'un point d'échantillonnage combinée (S108).

6. Procédé (100) selon l'une quelconque des revendications précédentes, dans lequel le rendu (S110) comprend un débruitage, facultativement dans lequel le débruitage comprend l'utilisation de séquences de générateur de nombres aléatoires, RNG, pour l'échantillonnage des données d'imagerie médicale comprises dans l'ensemble de données d'imagerie médicale.

7. Procédé (100) selon l'une quelconque des revendications précédentes, dans lequel l'ensemble de données d'imagerie médicale est acquis au moyen d'un scanner médical, le scanner médical comprenant un dispositif sélectionné dans le groupe constitué par :
- un dispositif à rayons X ;
- un dispositif à ultrasons, US ;
- un dispositif de tomographie par émission de positons, PET ;
- un dispositif de tomodensitométrie, CT ;
- un dispositif de tomographie par émission monophotonique, SPECT ; et
- un dispositif de tomographie par résonance magnétique, MRT.

8. Procédé (100) selon l'une quelconque des revendications précédentes, dans lequel l'au moins une propriété optique comprend au moins l'une des propriétés suivantes :
- une opacité ;
- une réflectance ;
- une couleur ; et
- au moins une valeur indiquant une diffusion chromatique.

9. Procédé (100) selon l'une quelconque des revendications précédentes, dans lequel le rendu (S110) comprend l'application d'un filtre de reconstruction.

10. Procédé (100) selon l'une quelconque des revendications précédentes, dans lequel le rendu (S110) comprend le lancer de rayons le traçage de chemins de Monte Carlo, la diffusion sous-surface, SSS, et/ou le rendu d'un maillage coloré.

11. Procédé (100) selon la revendication immédiatement précédente, dans lequel l'indicateur d'incertitude reçu (S102) est mis en correspondance avec au moins une propriété de la SSS, en particulier dans lequel une atténuation sous-surface d'une ou plusieurs bandes de longueurs d'onde est modulée selon l'indicateur d'incertitude reçu (S102).

12. Procédé (100) selon l'une quelconque des revendications précédentes, dans lequel, en l'absence d'une interaction utilisateur, pour le rendu (S110), plusieurs passes stochastiques sont accumulées et/ou moyennées sur des données d'imagerie médicale associées à différents points d'échantillonnage.

13. Procédé (100) selon l'une quelconque des revendications précédentes, dans lequel, en présence d'une interaction utilisateur, le rendu (S110) est réalisé sans accumulation de plusieurs passes stochastiques et/ou sans moyennage sur des données d'imagerie médicale associées à différents points d'échantillonnage ; facultativement
dans lequel, après une période de temps prédéterminée pendant laquelle aucune interaction utilisateur n'est reçue, plusieurs passes stochastiques sont accumulées et/ou moyennées sur des données d'imagerie médicale associées à différents points d'échantillonnage.

14. Procédé (100) selon l'une quelconque des revendications précédentes, dans lequel le rendu (S110) comprend le rendu d'une représentation inhomogène du volume et/ou de la surface, comprenant au moins partiellement un masque de segmentation et au moins partiellement une structure anatomique, en particulier teintée, de préférence selon une valeur d'échelle HU sélectionnée.

15. Dispositif informatique (200) de rendu de volume et/ou de rendu de surface d'un ensemble de données d'imagerie médicale sur la base de propriétés optiques par points d'échantillonnage, le dispositif informatique (200) comprenant :
- un module de réception (202) configuré pour recevoir un indicateur d'incertitude par voxel et/ou par élément de surface en relation avec un masque de segmentation d'un ensemble de données d'imagerie médicale ;
- un module de mise à l'échelle (204) configuré pour mettre à l'échelle une randomisation d'un ou de plusieurs points d'échantillonnage sur la base de l'indicateur d'incertitude reçu ;
- un module de détermination (206) configuré pour déterminer au moins une propriété optique par point d'échantillonnage ; et
- un module de rendu (210) configuré pour rendre le volume sur la base des voxels et/ou la surface sur la base des éléments de surface, le rendu étant basé sur l'au moins une propriété optique par point d'échantillonnage déterminée

16. Dispositif informatique (200) selon la revendication immédiatement précédente, configuré en outre pour réaliser l'une quelconque des étapes et/ou comprendre l'une quelconque des caractéristiques de l'une quelconque des revendications de procédé 2 à 14.

17. Système de rendu de volume et/ou de rendu de surface d'un ensemble de données d'imagerie médicale sur la base de propriétés optiques par points d'échantillonnage, comprenant :
- un scanner médical configuré pour fournir un ensemble de données d'imagerie médicale ; et
- un dispositif informatique (200) selon la revendication 15 ou 16, dans lequel le module de réception (202) est configuré pour recevoir l'indicateur d'incertitude par voxel et/ou par élément de surface en relation avec le masque de segmentation de l'ensemble de données d'imagerie médicale fourni par le scanner médical.

18. Produit programme d'ordinateur comprenant des éléments de programme qui amènent un dispositif informatique (200) à accomplir les étapes du procédé de rendu de volume et/ou de rendu de surface d'un ensemble de données d'imagerie médicale sur la base de propriétés optiques par points d'échantillonnage selon l'une des revendications de procédé précédentes, lorsque les éléments de programme sont chargés dans une mémoire du dispositif informatique (200) et exécutés.

19. Support lisible par ordinateur sur lequel sont stockés des éléments de programme pouvant être lus et exécutés par un dispositif informatique (200), afin de réaliser des étapes du procédé de rendu de volume et/ou de rendu de surface d'un ensemble de données d'imagerie médicale sur la base de propriétés optiques par points d'échantillonnage selon l'une des revendications de procédé précédentes, lorsque les éléments de programme sont exécutés par le dispositif informatique (200).
